# EUROPEAN PATENT SPECIFICATION

(11) **EP 3 181 756 B1**
(45) Date of publication and mention of the grant of the patent: **19.02.2020**
(21) Application number: 16201510.1
(22) Date of filing: 30.11.2016
(51) Int. Cl.: E01F 8/00, B32B 7/08, B32B 15/04, B32B 15/18, B32B 19/00, B32B 3/06, B32B 3/26, E04C 2/24, E04C 2/38, E04B 1/86, B32B 5/02, B32B 5/26, B32B 15/14, B30B 1/34, B30B 15/30, E04B 2/00, B32B 15/20, B30B 1/38, B32B 37/10, E04C 2/284, B32B 7/05

(54) **METHOD FOR MANUFACTURING OF A SOUNDPROOF PANEL USING A PRESSING UNIT, A PRESSING UNIT, A SOUNDPROOF PANEL AND A SOUNDPROOF WALL**
VERFAHREN ZUR HERSTELLUNG EINER SCHALLDICHTEN PLATTE MIT EINER PRESSVORRICHTUNG, PRESSVORRICHTUNG, SCHALLDICHTE PLATTE UND SCHALLSCHUTZWAND
PROCÉDÉ DE FABRICATION D'UN PANNEAU INSONORISÉ À L'AIDE D'UNE UNITÉ DE COMPRESSION, UNITÉ DE COMPRESSION, PANNEAU INSONORISÉ ET MUR INSONORISÉ

(30) Priority: 30.11.2015 NL 2015880
(43) Date of publication of application: 21.06.2017
(73) Proprietor: Kokosystems Holding B.V., 2685 LX Poeldijk (NL)
(72) Inventor: Fresco, David Aaron, 2291 RP Wateringen (NL); Groenewegen, Nicolaas Henricus Maria, 2675 XC Honselersdijk (NL)
(74) Representative: Nederlandsch Octrooibureau

(56) References cited:
- WO-A1-99/22075
- NL-C- 2 014 010
- US-A- 4 361 314
- US-A1- 2001 047 629
- US-A1- 2004 128 947
- US-A1- 2015 217 551

## Description

### Field of the Invention

The present invention relates to a method for manufacturing of a soundproof panel. The present invention further relates to a soundproof panel. The present invention further relates to a soundproof wall comprising such a soundproof panel.

### Background

Known methods for manufacturing of soundproof panels require a lot of manual labor. In general a contents receiving frame is formed, for example by connecting three U-shaped profiles. Thus leaving one of the four sides of the frame open, in which material can be slid into the frame via the open side of the frame. For example the frame can be filled with rows of tubes covered with fiber material or the frame can comprise nets on the side for receiving smaller insulation material.

Such methods require the materials to be tightly introduced in the contents receiving frame. This manner of manufacturing requires intensive labor from the working force and is a time consuming activity.

Another disadvantage with the existing methods by filling a frame in tight-fitting conditions, is that the filling is not completely perfect. This requires additional labor and time to correct for irregularity and/or errors.

US 4361314A discloses a device for attaching a second component to a first component in a secure but detachable manner. The second component has a clip in the form of an angle. The first component has a recess large enough to accept the clip. The first component works in conjunction with a locking device so designed that in one position it will accept the clip but that in a different position it will permit the locking of the clip.

NL 2014010C discloses a sound insulating panel which comprises as contents a main plate with on one or two sides thereof an array of parallel tubes is arranged, which tubes are surrounded by a fibre material. A rectangular framework of U-profiles is arranged on the perimeter of the contents. The ends of the tubes are received in the openings of the U-profiles.

### Object of the Invention

An object of the invention is to provide a method for manufacturing of a soundproof panel which simplifies the production process. A further object of the invention is to provide a method which is more reliable. An even further object of the invention is to provide a method which has a shorter production time compared to known methods.

### Summary of the Invention

The object is achieved by a method for manufacturing of a soundproof panel using a pressing unit, in accordance with claim 1.

According to an example, the contents are provided on the support surface at a first position and the support surface of the pressing unit is moved to a second position where the pressure is applied to the contents, wherein the first position and the second position are distinct positions.

According to an embodiment, the present invention relates to the method as described above, wherein the method comprises the steps of providing towing wires through the contents to tighten the contents.

Moreover, a pressing unit not being part of the invention is described for performing the method according to the present invention, comprising: a movable support with a support, a press plate to apply a pressure on an object provided on the support, when the support is positioned under and parallel to the press plate, and actuation system is configured to move the press plate relative to the support plate, perpendicular to the surface of the press plate.

According to an example not being part of the invention, the actuation system of the pressing unit as described above, comprises multiple air cylinders.

Moreover, the present invention relates to a soundproof panel in accordance with claim 3, wherein the soundproof panel is manufactured according to a method for manufacturing a soundproof panel as described above, the soundproof panel comprising a main plane with, on both sides thereof, two main plane sides and a circumference delimiting the main plane sides.

According to an embodiment, the present invention relates to the soundproof panel as described above, wherein on both main plane sides of the sound insulating plate at least a layer of mineral wool is arranged.

Moreover, the present invention relates to a soundproof wall, comprising one or more soundproof panels as described above.

According to an embodiment, the present invention relates to the soundproof wall as described above, wherein between adjacent panels an elongated support member, such as a support pole, is arranged, with an H-shaped cross-section, wherein each adjacent panel is tightly received in an open side of the H-shaped cross-section.

### Brief description of Drawings

The invention will be explained in more detail below with reference to drawings in which illustrative embodiments thereof are shown. They are intended exclusively for illustrative purposes and not to restrict the inventive concept, which is defined by the appended claims.
Figure 1 shows a cross-section in side view of a pressing unit;
Figure 2 shows a schematic top view of a pressing unit;
Figure 3 shows a flow diagram of a method for manufacturing a soundproof panel using a pressing unit according to an embodiment of the invention;
Figure 4 shows a perspective view of a soundproof panel according to an embodiment of the invention;
Figure 5a shows a cross-section in top view of a soundproof panel according to an embodiment of the invention, provided with a single layer of mineral wool;
Figure 5b shows a cross-section in top view of a soundproof panel according to an embodiment of the invention, provided with a double layer of mineral wool; and
Figure 6 shows a soundproof wall provided with soundproof panels according to an embodiment of the invention.

### Detailed Description of Embodiments

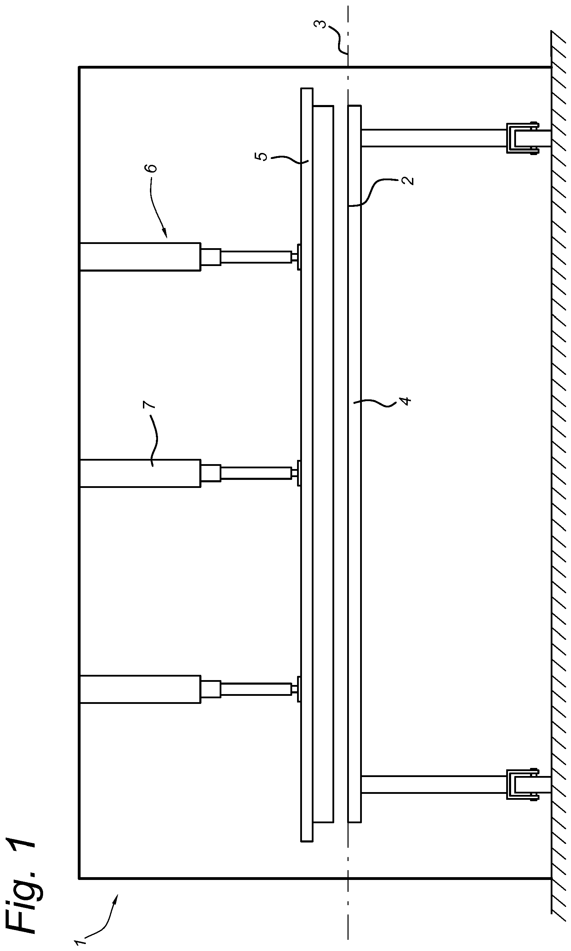

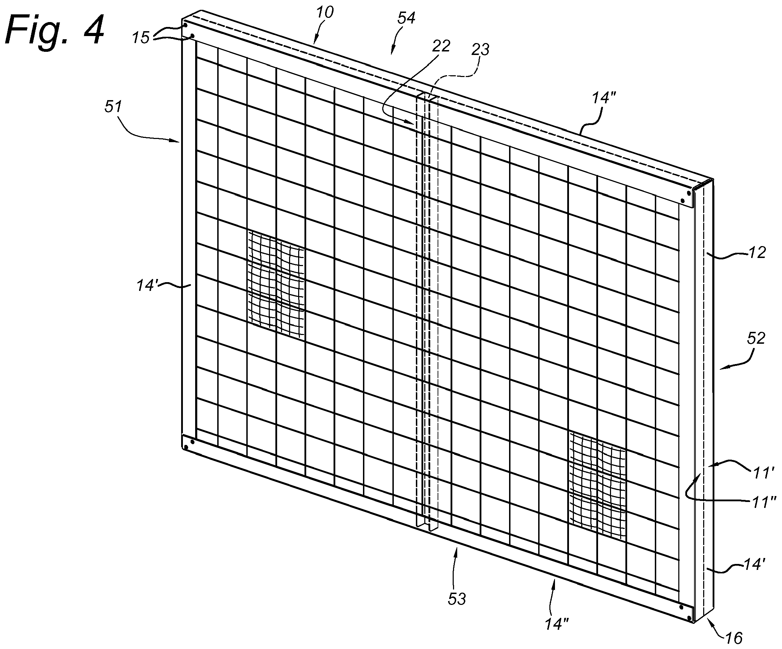

Figure 1 shows a pressing unit 1 for manufacturing a soundproof panel 10 (shown in figure 4). The pressing unit 1 comprises a support 2 and a press plate 5. The support 2 is provided with a support plane 3, indicated by the dotted line, and a circumference 4 delimiting the support 2. The support 2 of the pressing unit 1 is configured for receiving and positioning the different layers of materials of which the soundproof panel 10 consist. The press plate 5 is provided substantially above a pressing position P of the support 2.

The press plate 5 is configured for applying a pressure by lowering the press plate 5 towards the support 2 onto an object on the support 2, when the support 2 is located at the pressing position P.

The support 2 and the press plate 5 have substantially a press size which is adjustable dependent on a size of the soundproof panel 10. The support 2 and the press plate 5 can, for example, comprise removable substructures.

The pressing unit 1 further comprises an actuation system 6 for lowering the press plate 3. According to an example not being part of the invention, the actuation system 6 comprises air cylinders 5.

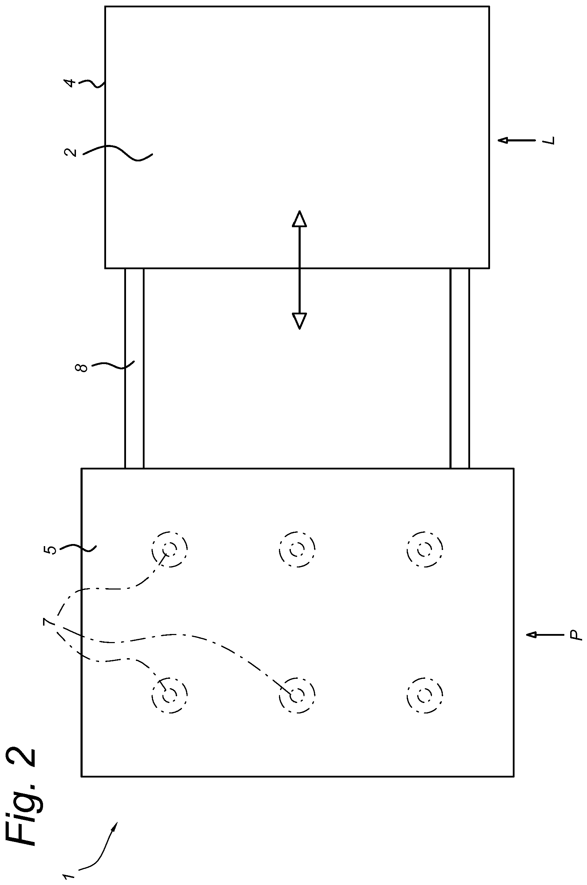

Figure 2 shows a pressing unit 1 for manufacturing a soundproof panel 10 according to figure 1.

According to an example not being part of the invention, the support 2 is provided with transport means, such as multiple wheels, for allowing movement of the support 2 along multiple tracks 8 that are mounted on the floor. At each end of the tracks there is a fixed end stop for stopping movement of the support 2 in respectively a loading position L of the support 2 and the pressing position P of the support 2.

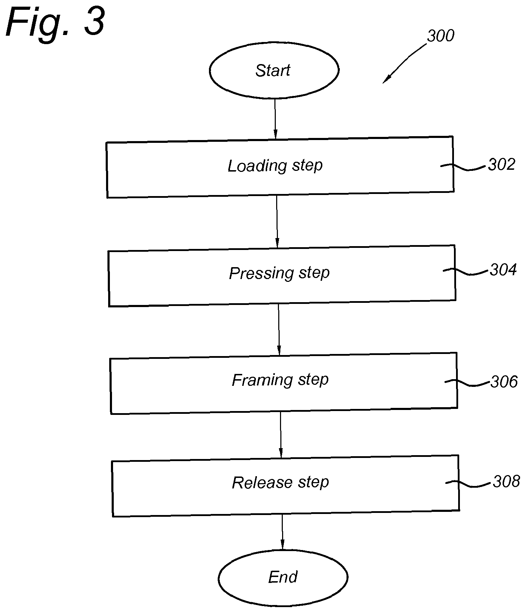

Figure 3 shows a flow diagram of a method for manufacturing of soundproof panel 10 according to an embodiment of the invention.

During use, in a first step 302 of a method for manufacturing a soundproof panel 300 the pressing unit 1 receives multiple layers of material on the support 2 of the pressing unit 1 at the loading position L of the support, thereby forming contents 13 of a soundproof panel 10. The layers of material 13 have roughly the size of the soundproof panel 10. The layers of material 13 comprise an extending part sticking out from the support 2. The extending part has a length of substantially 2 cm relative to the circumference 4 of the support, optionally in all directions of the support plane 3.

According to the invention, a wire net 17, preferably a galvanized wire net, is placed upon the support 2 of the pressing unit 1 as a first layer.

As a second layer, an at least one sound insulating plate 21, preferably a plastisol coated steel plate, is provided on the first layer. In a preferred embodiment of the invention the at least one sound insulating plate 21 comprises two subplates that overlap with substantially 3 cm.

On the second layer a U-shaped reception space 22, such as a galvanised steel U-profile, is added as a reinforcement. The U-shaped reception space 22 is provided on substantially a symmetry axis of the second layer, preferably parallel to one of the edges 51, 52, 53, 54 (shown in figure 2).

As a third layer, a layer of mineral wool 20 is provided on the second layer. The thickness of the layer of mineral wool 20 can vary, depending on the needed sound absorption. The U-shaped reception space 22 is also filled with mineral wool.

According to the invention a subnet 19, such as a windsheet, is added to cover the layer of mineral wool 22. The subnet 19 protects the mineral wool from weather conditions and is also better looking than mineral wool. Further according to the invention a synthetic separation net, such as a HDPE separator net 18, is added to cover the subnet 19. This is an extra layer of netting to protect the subnet 19.

Optionally, a coconut fiber cloth is added to cover the layer of mineral wool 22 or the subnet 19. Advantageously, the soundproof panel 10 has a more natural feeling and provides a support for growth of climber and creeper plants.

Optionally, a perforated plate is added to cover the layer of mineral wool 22 or the subnet 19. For example, an aluminum plate or a galvanized steel plate can be used, with or without powder coating. Advantageously, the fire resistance of the soundproof plate 10 is improved. This embodiment is particularly useful next to a railway.

As a final layer, a wire net 17 is added. The layer of materials as described above forms the contents 13 of the soundproof panel 10, wherein the contents 13 are compressible and ready to be pressed in the pressing unit.

The at least one sound insulating plate comprises mineral wool on both main plane sides 11',11" of the soundproof panel 10, as such creating a double absorption panel.

In a next step 304 of the method for manufacturing a soundproof panel the pressing unit 1, the support 2 provided with the contents 13 is transported from a loading position L to a pressing position P of the support 2. Furthermore, the press plate 5 is lowered towards the contents on the support 2 using the actuation system 6 for applying a pressure on the contents 13 provided on the support 2. In an embodiment of the invention the movements are reversed and the actuation system moves the support 2 towards the press plate 5.

While the contents 13 is pressed on the support 2 of the pressing unit 1, the extending part of the contents 13 sticks out from the support 2, leaving room for sliding profiles 14', 14", such as galvanized U-shaped profiles, over the circumferential edges 51, 52, 53, 54 of the contents 13.

In a third step 306 of the method for manufacturing a soundproof panel, the profiles 14',14"are slided over the circumferential edges 51, 52, 53, 54, wherein the legs of the profiles overlap for about 4 - 5 cm with the contents 13.

Preferably, the profiles 14',14" are provided with pre-punched holes on both ends of the profiles.

In the corners of the soundproof panel 10, the profiles 14',14" overlap, covering the circumference 12 of the soundproof panel 10 by a rectangular frame 16.

The frame 16 is formed by letting the ends of two horizontal and two vertical profiles 14', 14" overlap in the corners and by connecting in each corner the overlapping parts of the profiles to each other with connection means. Establishing this connection can be done in any conceivable way. For instance, a glued, a welded or a screwed connection are all conceivable. Preferably, the U-shaped profiles 14', 14" are connected by means of blind rivets. Optionally this is done after removing the contents from the pressing unit 1.

As a result of the preceding steps, the soundproof panel is constructed.

Preferably, the U-shaped profiles 14', 14" comprise, on beforehand, at least a hole, such as a square hole, for receiving the connection means. In this way, the profiles 14', 14" are connected to each other in a torque-resistant fashion and a solid/sturdy rectangular or square frame 16 is obtained.

In a preferred embodiment of the invention the upstanding legs of the horizontal profiles 14' are skewed inwards, such that contents consisting of layers of material, with a smaller width can also be clamped between the legs.

In a fourth step 308 of the method for manufacturing a soundproof panel, the pressure is released from the soundproof panel 10 by separating the pressing plate from the support, for example by controlling the air cylinders 6 to go upwards. After the pressure is released the support is moved out of pressing unit, by rolling it over tracks.

The sound proof panel is taken from the support 2 and put (on the floor) in a substantially vertical position. A number of holes are drilled through the soundproof panel 10, wherein the number of holes depends on the size of the panel 10. Towing wires 24, such as stainless steel towing wires, are put in the holes and are used to connect the steel wire nets. Advantageously, the towing wires 24 tighten the soundproof panel 10 so as to remove any hump on a main plane side. This flattens out the main plane sides 11 of the soundproof panel 10.

Figure 4 shows a perspective view of a soundproof panel 10 according to the invention. The soundproof panel 10 is provided with a geometric main plane indicated by dotted lines, with a relatively thin sound insulating plate 21 with main plane sides 11', 11" on both sides, and a circumference 12 delimiting these main plane sides 11', 11". The soundproof panel 10 is further provided with wire nets 17 along the main plane sides 11', 11", covering the main plane sides 11', 11", and a layer of mineral wool 20 along a main plane side 11 arranged between the sound insulating plate 21 and a wire net 17.

At a first pair of opposing edges 51, 52 of the circumference 12, a corresponding first pair of U-shaped profiles 14' is provided. The layer of mineral wool is clampingly received in the open sides of these U-shaped profiles 14'. At a second pair of opposing edges 53, 54 of the circumference 12 at right angles with the first pair of U-shaped profiles, a corresponding second pair of U-shaped profiles 14" is provided. The first pair of U-shaped profiles 14' and the second pair of U-shaped profiles 14" are connected in such a way that a rectangular frame 16 is formed. The U-shaped profiles 14', 14" may have a thickness of for example 1-3 mm, such as 1,25 mm or 2 mm, depending on the size of the soundproof panel 10.

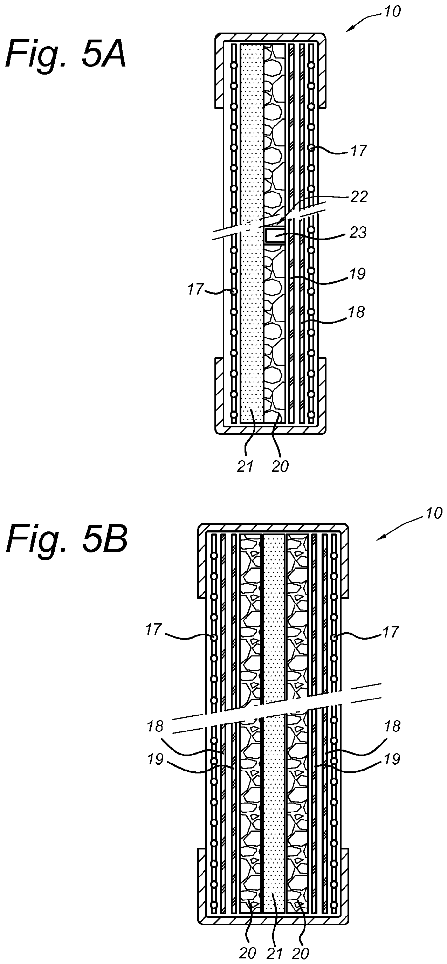

As shown in figure 5a, use is made of a subnet 19 and separation net 18, which are arranged between the layer of mineral wool and the wire net 17 are each clamped between the U-shaped profiles 14', 14".

As can be seen in particular in figure 5a, part of the layer of mineral wool 20 can be received in a U-shaped reception space 22 formed by connecting a further U-shaped profile 22 to the sound insulating plate 21. Then the legs of the further U-shaped profile 22 project away from the sound insulating plate 21.

The U-shaped profiles 14', 14", 22 may comprise any conceivable construction material and can be constructed in any conceivable way.

According to an embodiment, the soundproof panel 10 comprises towing wires 24 extending through the soundproof panel 10. The towing wires 24 are connected to the wire nets 17 and tighten the soundproof panel 10. This is especially useful when used in substantially equidistant condition with a fixed distance between the neighbouring towing wires 24 and the circumference 12.

To obtain improved sound insulation a thicker sound insulating plate 21 can be used, such as plasticized steel plate, although a relatively high sound insulation can be obtained with a relatively thin sound insulating plate 21. The sound insulating plate used, however, may comprise any conceivable material and can be constructed in any conceivable way. The sound insulating plate 21 can for example be constructed from metal, such as aluminum, wood-like materials, such as wood fiber mortar plate, and synthetic materials, such as polycarbonate or acrylate. Important, however, is that the plate is constructed from a non-porous material and that the sound insulating plate 21 has a certain minimum mass per unit of surface area, and a high durability.

The embodiment as shown in figure 4 has relatively limited thickness compared to the other types of soundproof panels, as a result of which a relatively small type of foundation pole can be used, such as a foundation pole formed of a steel IPE profile beam. The soundproof panel 10 and the foundation poles to be applied have such a relatively low weight, that the sound screen can be built by hand up until a height of approximately 3 m above ground level. The inventors have shown the insight that a wall, up until a height of approximately 200 - 250 cm, can be built with a soundproof panel 10, i.e. a soundproof panel 10 then has a height of approximately 200 - 250 cm. By contrast, the width of the soundproof panel 10 can be for example 400 cm or more.

Figure 5a shows a cross-section in top view of a soundproof panel 10 according to an embodiment, provided with a single layer of mineral wool 14, a sound insulating plate 2, and wire nets 17. The upstanding legs of the U-shaped reception space 22 are also visible, in which reception space 22 mineral wool is received.

According to the invention, a subnet 19 and a synthetic separation net 18 is arranged between each wire net 17 and respective layer of mineral wool.

In this way, the soundproof panel 10 is both sound insulating, as well as relatively highly sound-absorbing, on both sides.

Figure 5b shows a cross-section in top view of a soundproof panel 10 according to an embodiment, provided with a double layer of mineral wool 14, a sound insulating plate 2, and wire nets 17. Due to the relatively high esthetical value, this type of soundproof panel 10 is specifically suited for individuals in a high-noise environment or for individuals who are themselves producing a lot of noise, for instance due to the owning of a swimming pool, noisy children or barking dogs, because both sides of the panel 1 are provided with mineral wool with sound-absorbing properties. Due to the relatively high esthetic value, the soundproof panel 10 can also be used in, for instance, an office environment. Besides, the production costs of such a panel 10 are relatively low in practice.

In a preferred embodiment, a subnet 19 and a synthetic separation net 18 is arranged between each wire net 17 and respective layer of mineral wool.

In this way, the soundproof panel 10 is both sound insulating, as well as relatively highly sound-absorbing, on both sides.

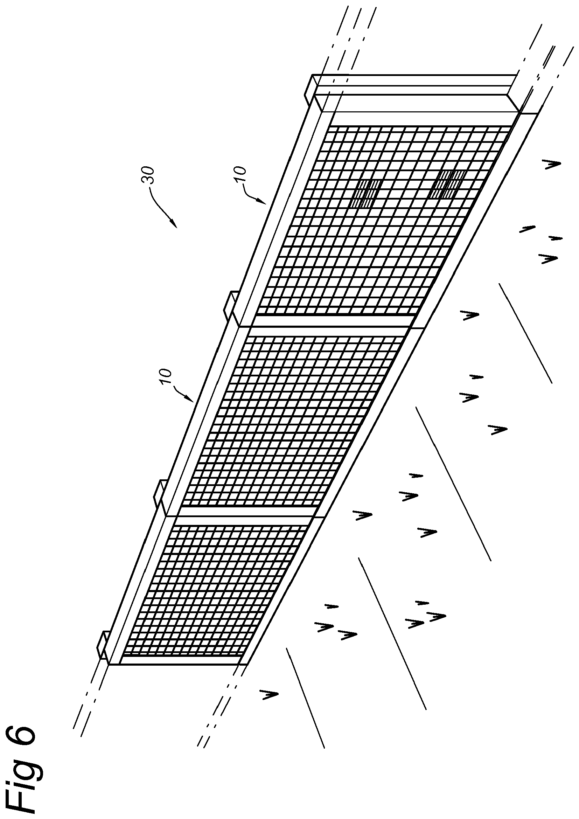

Figure 6 shows a soundproof wall 30 provided with soundproof panels 10 according to the invention. The soundproof panels 10 according to the invention therein are tightly mounted in a horizontal row against a number of supporting poles. Of course, it is possible to arrange multiple of such panel rows on top of each other. However, when a soundproof wall 30 of more than 3 m high is needed, a crane has to be used during installation. Preferably, the panels 10 are then fitted with crane eyelets on the upper side thereof, for instance on the upper U-shaped profile 14'. The supporting poles can, for instance, have an H-shaped cross-section.

Other alternatives and equivalent embodiments of the present invention are conceivable within the idea of the invention, as will be clear to the person skilled in the art. The scope of the invention is limited only by the appended claims.

## Claims

1. Method for manufacturing a soundproof panel (10) using a pressing unit (1), comprising the steps of:
- providing contents of the soundproof panel comprising multiple layers by arranging in order:
- a wire net (17);
- a non-porous sound insulating plate (21);
- a layer of mineral wool (20);
- a subnet (19);
- a synthetic separation net (18); and
- a wire net (17)
- providing contents (13) of the soundproof panel (10) on a support surface (2) of the pressing unit (1), the contents comprising an extending part sticking out from the support surface (2);
- applying a pressure to the contents (13) by displacing a press plate (5) of the pressing unit (1) and the support surface (2) of the pressing unit (1) towards each other to press the contents (13);
- sliding U-shaped profiles (14', 14") over circumferential edges of the extending part of the pressed contents (13) so as to receive the circumferential edges in the profiles, while maintaining the pressure, wherein the U-shaped profiles overlap and are connected in such a way that a rectangular frame (16) is formed.

2. Method according to claim 1, wherein the method further comprises the step of drilling holes through the soundproof panel (10) and providing towing wires (24) extending through the holes in the soundproof panel (10) connecting the wire nets to tighten the contents, preferably the towing wires (24) are positioned equidistant from neighbouring towing wires (24) and a circumference (12) of the soundproof panel (10).

3. Soundproof panel (10) manufactured according to claim 1 or claim 2, comprising a main plane with, on both sides thereof, two main plane sides (11) and a circumference (12) delimiting the main plane sides (11), with contents of the soundproof panel comprising multiple layers ordered as follows:
- a wire net (17);
- a non-porous sound insulating plate (21);
- a layer of mineral wool (20);
- a subnet (19);
- a synthetic separation net (18); and
- a wire net (17)
one wire net (17) arranged along each main plane side (11) of the main plane, wherein, at a first pair of opposing edges (51, 52) of the circumference (12), a corresponding first pair of U-shaped profiles (14') is provided, wherein the contents (13) of the soundproof panel (10) is clampingly received in the open sides of the U-shaped profiles (14'), and wherein, at a second pair of opposing edges (53, 54) of the circumference (12), a corresponding second pair of U-shaped profiles (14") is provided, wherein the first pair of U-shaped profiles (14') and the second pair of U-shaped profiles (14") connect in such a way, that a rectangular frame (15) is formed.

4. Soundproof panel (10) according to claim 3, wherein the upstanding legs of the first pair of U-shaped profiles (14') are skewed inwards.

5. Soundproof panel (10) according to any one of claims 3 to 4, wherein on both main plane sides of the sound insulating plate (21) a layer of mineral wool (20) is arranged.

6. Soundproof wall (30), comprising one or more soundproof panels (10) according to any one of the claims 3-5.

7. Soundproof wall (30) according to claim 6, wherein between adjacent panels (10) an elongated support member, such as a support pole, is arranged, with an H-shaped cross-section, wherein each adjacent panel (10) is tightly received in an open side of the H-shaped cross-section.

## Patentansprüche

1. Verfahren zum Herstellen einer schalldichten Tafel (10) unter Verwendung einer Presseinheit (1), das die Schritte umfasst:
Bereitstellen von Bestandteilen der schalldichten Tafel, die mehrere Schichten umfasst, durch Anordnen in der Reihenfolge:
eines Drahtnetzes (17)
einer nicht porösen Schallisolierplatte (21);
einer Schicht aus Mineralwolle (20);
eines Teilnetzes (19);
eines synthetischen Trennnetzes (18); und
eines Drahtnetzes (17)
Bereitstellen von Bestandteilen (13) der schalldichten Tafel (10) auf einer Trägerfläche (2) der Presseinheit (1), wobei die Bestandteile einen Erstreckungsteil umfassen, der von der Trägerfläche (2) vorsteht;
Anlegen eines Drucks an die Komponenten (13) durch Verschieben einer Pressplatte (5) der Presseinheit (1) und der Trägerfläche (2) der Presseinheit (1) hin zueinander, um die Bestandteile (13) zu pressen;
Schieben von U-förmigen Profilen (14', 14") über Umfangsränder des Erstreckungsteils der gepressten Bestandteile (13), um die Umfangsränder in den Profilen aufzunehmen, während der Druck aufrechterhalten wird, wobei die U-förmigen Profile einander überlappen und so verbunden sind, dass ein rechteckiger Rahmen (16) gebildet wird.

2. Verfahren nach Anspruch 1, wobei das Verfahren ferner den Schritt des Bohrens von Löchern durch die schalldichte Tafel (10) und des Bereitstellens von Zugdrähten (24) umfasst, die sich durch die Löcher in der schalldichten Tafel (10) erstrecken, die die Drahtnetze verbinden, um die Bestandteile festzuziehen, wobei vorzugsweise die Zugdrähte (24) in gleichem Abstand zu benachbarten Zugdrähten (24) und einem Umfang (12) der schalldichten Tafel (10) positioniert sind.

3. Schalldichte Tafel (10), die nach Anspruch 1 oder 2 hergestellt wurde, umfassend eine Hauptebene mit zwei Hauptebenenseiten (11) und einem Umfang (12), der die Hauptebenenseiten (11) begrenzt, auf beiden Seiten davon, wobei Bestandteile der schalldichten Tafel mehrere Schichten umfassen, die wie folgt angeordnet sind:
ein Drahtnetz (17)
eine nicht poröse Schallisolierplatte (21);
eine Schicht aus Mineralwolle (20);
ein Teilnetz (19);
ein synthetisches Trennnetz (18); und
ein Drahtnetz (17)
wobei ein Drahtnetz (17) entlang jeder Hauptebenenseite (11) der Hauptebene angeordnet ist, wobei an einem ersten Paar von gegenüberliegenden Rändern (51, 52) des Umfangs (12) ein entsprechendes erstes Paar von U-förmigen Profilen (14') bereitgestellt ist, wobei die Bestandteile (13) der schalldichten Tafel (10) klemmend in den offenen Seiten der U-förmigen Profile (14') aufgenommen sind, und wobei an einem zweiten Paar von gegenüberliegenden Rändern (53, 54) des Umfangs (12) ein entsprechendes zweites Paar von U-förmigen Profilen (14") bereitgestellt ist, wobei das erste Paar von U-förmigen Profilen (14') und das zweite Paar von U-förmigen Profilen (14") so verbunden sind, dass ein rechteckiger Rahmen (15) gebildet wird.

4. Schalldichte Tafel (10) nach Anspruch 3, wobei die aufrechten Schenkel des ersten Paars von U-förmigen Profilen (14') nach innen schräglaufend sind.

5. Schalldichte Tafel (10) nach einem der Ansprüche 3 bis 4, wobei auf beiden Hauptebenenseiten der Schallisolierplatte (21) eine Schicht aus Mineralwolle (20) angeordnet ist.

6. Schalldichte Wand (30), die eine oder mehrere schalldichte Tafeln (10) nach einem der Ansprüche 3 bis 5 umfasst.

7. Schalldichte Wand (30) nach Anspruch 6, wobei zwischen benachbarten Tafeln (10) ein längliches Trägerelement wie z. B. eine Trägersäule mit einem H-förmigen Querschnitt angeordnet ist, wobei jede benachbarte Tafel (10) fest in einer offenen Seite des H-förmigen Querschnitts aufgenommen ist.

## Revendications

1. Procédé de fabrication d'un panneau insonorisé (10) utilisant une unité de pression (1), comprenant les étapes consistant à :
- fournir le contenu du panneau insonorisé comprenant plusieurs couches en disposant dans l'ordre :
- un filet métallique (17) ;
- une plaque d'insonorisation non poreuse (21) ;
- une couche de laine minérale (20) ;
- un sous-filet (19) ;
- un filet de séparation synthétique (18) ; et
- un filet métallique (17)
- fournir un contenu (13) du panneau insonorisé (10) sur une surface support (2) de l'unité de compression (1), le contenu comprenant une partie s'étendant dépassant de la surface support (2) ;
- appliquer une pression sur le contenu (13) en déplaçant une plaque de pression (5) de l'unité de pression (1) et la surface d'appui (2) de l'unité de pression (1) l'une vers l'autre pour presser le contenu (13) ;
- glisser des profilés en forme de U (14', 14" ') sur les bords périphériques de la partie étendue du contenu (13) pressé, afin de maintenir les bords périphériques dans les profilés en forme de U, en maintenant la pression ; les profilés en forme de U étant superposés et reliés de telle manière que soit formé un cadre rectangulaire (16).

2. Procédé selon la revendication 1, dans lequel le procédé comprend en outre l'étape consistant à percer des trous à travers le panneau insonorisé (10) et à prévoir des câbles de traction (24) s'étendant à travers les trous du panneau insonorisé (10) reliant les filets métalliques pour tendre le contenu, de préférence les câbles de traction (24) sont placés à égale distance des câbles de traction voisins (24) et d'une circonférence (12) du panneau insonorisé (10).

3. Panneau insonorisé (10) fabriqué selon la revendication 1 ou la revendication 2, comprenant un plan principal avec, de part et d'autre de celui-ci, deux faces planes principales (11) et une circonférence (12) délimitant les faces planes principales (11), le contenu du panneau insonorisé comprenant plusieurs couches disposées comme suit :
- un filet métallique (17) ;
- une plaque d'insonorisation non poreuse (21) ;
- une couche de laine minérale (20) ;
- un sous-filet (19) ;
- un filet de séparation synthétique (18) ; et
- un filet métallique (17),
un filet métallique (17) disposé le long de chaque face plane principale (11) du plan principal, dans lequel, sur une première paire de bords opposés (51, 52) de la circonférence (12), une première paire correspondante de profilés en forme de U (14') est fournie, le contenu (13) du panneau insonorisé (10) étant reçu par serrage sur les côtés ouverts des profilés en forme de U (14'), et dans laquelle, sur une deuxième paire de bords opposés (53, 54) de la circonférence (12), une deuxième paire correspondante de profilés en forme de U (14") est prévue, la première paire de profilés en forme de U (14') et la deuxième paire de profilés en forme de U (14") étant reliées de telle manière qu'un cadre rectangulaire (15) est formé.

4. Panneau insonorisé (10) selon la revendication 3, dans lequel les montants de la première paire de profilés en forme de U (14') sont inclinés vers l'intérieur.

5. Panneau insonorisé (10) selon l'une quelconque des revendications 3 à 4, dans lequel une couche de laine minérale (20) est disposée sur les deux faces planes principales de la plaque d'insonorisation (21).

6. Paroi insonorisée (30), comprenant un ou plusieurs panneaux insonorisés (10) selon l'une quelconque des revendications 3-5.

7. Paroi insonorisée (30) selon la revendication 6, dans laquelle entre des panneaux adjacents (10) est disposé un élément de support allongé, tel qu'un poteau de support, avec une section transversale en forme de H, dans laquelle chaque panneau adjacent (10) est reçu fermement dans un côté ouvert de la section transversale en forme de H.
